# EUROPÄISCHE PATENTSCHRIFT

(11) **EP 0 920 603 B1**
(45) Veröffentlichungstag und Bekanntmachung des Hinweises auf die Patenterteilung: **12.12.2001**
(21) Anmeldenummer: 97935494.1
(22) Anmeldetag: 30.07.1997
(51) Int. Cl.: G01D 5/12, G08C 19/36, H03M 1/12

(54) **SCHALTUNGSANORDNUNG ZUR EIGENSICHEREN ERFASSUNG VON BINÄREN SIGNALEN EINES GEBERS**
CIRCUIT FOR INTRINSICALLY SAFE DETECTION OF THE BINARY SIGNALS OF A TRANSMITTER
CIRCUIT A SECURITE INTRINSEQUE POUR LA DETECTION DE SIGNAUX BINAIRES D'UN TRANSMETTEUR

(30) Priorität: 23.08.1996 DE 19634153
(43) Veröffentlichungstag der Anmeldung: 09.06.1999
(73) Patentinhaber: SIEMENS AKTIENGESELLSCHAFT, 80333 München (DE)
(72) Erfinder: KLUMPP, Wolfgang, D-77855 Achern (DE); MORIO, Francis, F-67360 Dieffenbach (FR)
(86) Internationale Anmeldenummer: DE9701617
(87) Internationale Veröffentlichungsnummer: WO9808058

(56) Entgegenhaltungen:
- EP-A- 0 538 624
- DE-A- 4 008 168
- DE-A- 4 443 646

## Beschreibung

Die Erfindung betrifft eine Schaltungsanordnung zur eigensicheren Erfassung von binären Signalen eines Gebers.

In explosionsgefährdeten Bereichen werden vorwiegend Geber, z. B. Wegfühler, nach DIN 19234 NAMUR eingesetzt. Diese Geber erzeugen durch Änderung ihres Innenwiderstands binäre Signale, die bei Versorgung des Gebers mit einer konstanten Versorgungsgleichspannung als unterschiedliche Ströme erfaßbar sind.

Der Erfindung liegt die Aufgabe zugrunde, neben der eigensicheren Erfassung binärer Signale eine Detektion eines Leitungsbruchs bzw. Kurzschlusses auf der Geberseite zu ermöglichen.

Gemäß der Erfindung wird die Aufgabe durch die in Anspruch 1 angegebene Schaltungsanordnung gelöst.

Vorteilhafte Weiterbildungen der erfindungsgemäßen Schaltungsanordnung sind den Unteransprüchen zu entnehmen.

Mittels der Spannungskomparatoren, die den Strom durch den Meßwiderstand mit unterschiedlichen konstanten Teilspannungen an dem Spannungsteiler vergleichen, lassen sich unterschiedliche Strombereiche definieren, die neben den beiden binären Zuständen des binären Gebersignals einen Leitungsbruch und einen Kurzschluß auf der Geberseite bezeichnen. Die Übertragung der von den Spannungskomparatoren gelieferten Vergleichsergebnisse an die Auswerteeinrichtung erfolgt vorzugsweise über Optokoppler, um eine Potentialtrennung zwischen Geber- und Auswerteseite zu erreichen. Aus dem gleichen Grund enthält ein zur Stromversorgung des Gebers dienendes Netzteil einen Übertrager. Die Anzahl der benötigten Optokoppler läßt sich durch eine den Spannungskomparatoren nachgeordnete Logikschaltung reduzieren, die die möglichen Kombinationen der Vergleichsergebnisse der Spannungskomparatoren in eine geringstmögliche Anzahl binärer Steuersignale für die Optokoppler umsetzt.

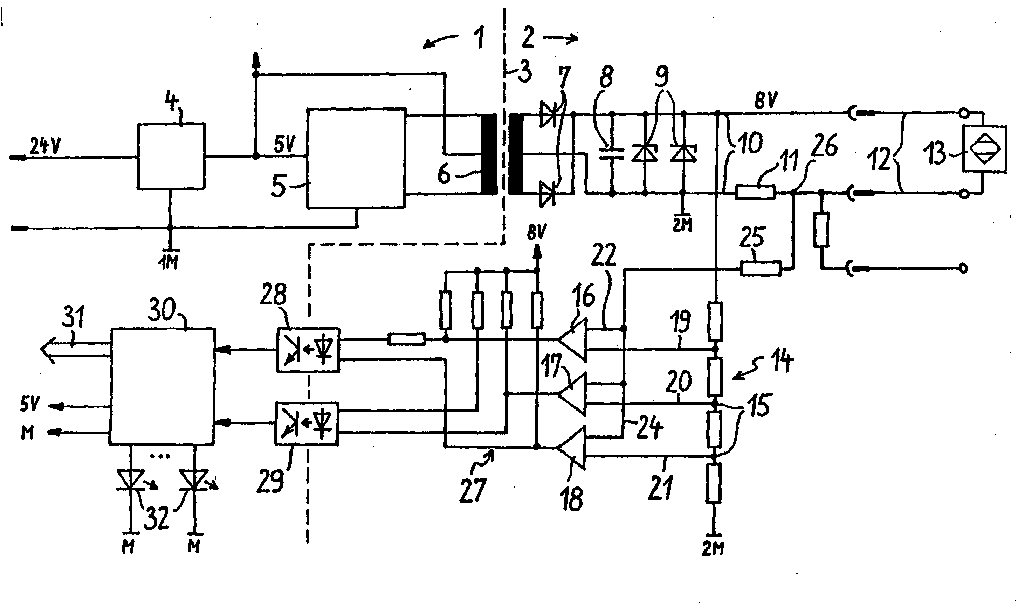

Zur weiteren Erläuterung der Erfindung wird im folgenden auf die Zeichnung Bezug genommen, die ein Ausführungsbeispiel der erfindungsgemäßen Schaltungsanordnung zeigt.

Die dargestellte Schaltung ist in eine Stromversorgungs- und Auswerteseite 1 und eine Geberseite 2 aufgeteilt, die beide durch eine Potentialtrennlinie 3 voneinander getrennt sind. Auf der Stromversorgungs- und Auswerteseite 1 wird aus einer Lastspannung von beispielsweise 24 V mittels eines Vorreglers 4 eine konstante Spannung von etwa 5 V erzeugt, die über eine Spannungszerhackerstufe 5 mit ausgangsseitigem Übertrager 6, Gleichrichter 7, Glättungskondensator 8 und Zenerbarriere 9 in eine konstante Versorgungsgleichspannung von etwa 8,2 V umgesetzt wird, die an einem Spannungsausgang 10 bereitgestellt wird. An dem Spannungsausgang 10 ist über einen Strommeßwiderstand 11 und eine Zweidrahtleitung 12 ein Geber 13 angeschlossen, der durch Änderung seines Innenwiderstands binäre Signale in Form von Änderungen seiner Stromaufnahme erzeugt. An dem Spannungsausgang 10 liegt ein aus vier Spannungsteilerwiderständen bestehender Spannungsteiler 14, an dessen drei Spannungsabgriffen 15 drei Spannungskomparatoren 16, 17 und 18 mit jeweils einem ihrer beiden Eingangsanschlüsse 19, 20 und 21 angeschlossen sind. Die anderen Eingangsanschlüsse 22, 23 und 24 der Spannungskomparatoren 16, 17 und 18 sind über einen gemeinsamen Widerstand 25 mit dem an dem Geber 13 liegenden Anschluß 26 des Strommeßwiderstands 11 verbunden.

Die Spannungskomparatoren 16, 17 und 18 vergleichen den von dem Strom durch den Geber 13 verursachten Spannungsabfall über dem Strommeßwiderstand 11 mit den konstanten Teilspannungen an den Spannungsabgriffen 15 des Spannungsteilers 14 und erzeugen je nachdem, ob der Spannungsabfall an dem Strommeßwiderstand 11 die betreffende Teilspannung über- oder unterschreitet, als Vergleichsergebnis ein Ausgangssignal "Eins" oder "Null". Bei einem Bruch der Zweidrahtleitung 12 fließt durch den Geber 13 kein Strom, und alle drei Spannungskomparatoren 16, 17 und 18 erzeugen jeweils einen Ausgangszustand "Null". Erzeugt der Geber 13 den binären Zustand "Aus", so fließt durch den Strommeßwiderstand 11 ein Strom, der den Spannungskomparator 18 in den Ausgangszustand "Eins" und die beiden anderen Spannungskomparatoren 16 und 17 in den Ausgangszustand "Null" steuert. Bei dem binären Zustand "Ein" des Gebers 13 fließt durch den Strommeßwiderstand 11 ein Strom, der die beiden Spannungskomparatoren 17 und 18 jeweils in den Ausgangszustand "Eins" und den Spannungskomparator 16 in den Ausgangszustand "Null" steuert. Bei einem Kurzschluß auf der Geberseite ist der Strom durch den Strommeßwiderstand 11 so groß, daß alle Spannungskomparatoren 16, 17 und 18 jeweils in den Ausgangszustand "Eins" gesteuert werden.

Diese vier möglichen Kombinationen der Vergleichsergebnisse, d. h. der Ausgangszustände der Spannungskomparatoren 16, 17 und 18, werden in einer Logikschaltung 27 in zwei binäre Steuersignale für zwei nachgeordnete Optokoppler 28, 29 umgesetzt. Bei dem gezeigten Ausführungsbeispiel weisen die Spannungskomparatoren 16, 17, 18 Open-collector-Ausgänge auf, die in der Weise untereinander und mit den Optokopplern 28, 29 verknüpft sind, daß bei einem fehlerfreien Betrieb des Gebers 13 der Optokoppler 28 angesteuert wird und bei dem binären Zustand "Ein" des Gebers 13 zusätzlich der Optokoppler 29 angesteuert wird und daß im Falle eines Kurzschlusses auf der Geberseite nur der Optokoppler 29 und bei einer Unterbrechung der Zweidrahtleitung keiner der Optokoppler 28, 29 angesteuert wird. Die über die Logikschaltung 27 und die Optokoppler 28, 29 übertragenen Vergleichsergebnisse der Spannungskomparatoren 16, 17 und 18 werden in einer Auswerteeinrichtung 30, z. B. einem Mikroprozessorsystem, auf der Stromversorgungs- und Auswerteseite 1 der Schaltung ausgewertet und auf einen Systembus 31 gegeben und ggf. über Leuchtdioden 32 angezeigt.

## Patentansprüche

1. Schaltungsanordnung zur eigensicheren Erfassung von binären Signalen eines Gebers (13) mit veränderlichem Innenwiderstand, mit einer eine konstante Versorgungsspannung erzeugenden Gleichspannungsquelle (2 - 9), an deren Spannungsausgang (10) über einen Strommeßwiderstand (11) der Geber (13) angeschlossen ist, mit einem an dem Spannungsausgang (10) liegenden mehrstufigen Spannungsteiler (14), an dessen Spannungsabgriffen (15) Spannungskomparatoren (16, 17, 18) mit jeweils einem Eingangsanschluß (19, 20, 21) angeschlossen sind, während die anderen Eingangsanschlüsse (22, 23, 24) der Spannungskomparatoren (16, 17, 18) mit dem an dem Geber (13) liegenden Anschluß (26) des Strommeßwiderstandes (11) verbunden sind, und mit den Spannungskomparatoren (16, 17, 18) nachgeordneten Optokopplern (28, 29) zur Übertragung der Vergleichsergebnisse der Spannungskomparatoren (16, 17, 18) an eine Auswerteeinrichtung (30).

2. Schaltungsanordnung nach Anspruch 1, **dadurch gekennzeichnet, daß** die Gleichspannungsquelle aus einem Netzteil mit einem Übertrager (6) zur Potentialtrennung besteht.

3. Schaltungsanordnung nach Anspruch 1 oder 2, **dadurch gekennzeichnet, daß** die Anzahl der Spannungsabgriffe (15) des Spannungsteilers (14) und der Spannungskomparatoren (16, 17, 18) jeweils drei beträgt.

4. Schaltungsanordnung nach Anspruch 3, **dadurch gekennzeichnet, daß** die Anzahl der Optokoppler (28) zwei ist und daß zwischen den Spannungskomparatoren (16, 17, 18) und den Optokopplern (28) eine Logikschaltung (27) liegt, die die möglichen Kombinationen der Vergleichsergebnisse der Spannungskomparatoren (16, 17, 18) in zwei binäre Steuersignale für die Optokoppler (28, 29) umsetzt.

## Claims

1. Circuit arrangement for the intrinsically safe detection of binary signals of a transmitter (13) having variable internal resistance, comprising a direct-voltage source (2-9) that generates a constant supply voltage and to whose voltage output (10) the transmitter (13) is connected via a current-measuring resistor (11), comprising a multi-stage voltage divider (14) situated at the voltage output (10) and to whose voltage tappings (15) voltage comparators (16, 17, 18) are connected by means of one input terminal (19, 20, 21) in each case, whereas the other input terminals (22, 23, 24) of the voltage comparators (16, 17, 18) are connected to that terminal (26) of the current-measuring resistor (11) that is situated at the transmitter (13), and comprising optocouplers (28, 29) situated downstream of the voltage comparators (16, 17, 18) for transmitting the comparison results of the voltage comparators (16, 17, 18) to an evaluation device (30).

2. Circuit arrangement according to Claim 1, **characterized in that** the direct-voltage source comprises a mains unit having a transformer (6) for potential isolation.

3. Circuit arrangement according to Claim 1 or 2, **characterized in that** the number of voltage tappings (15) of the voltage divider (14) and of the voltage comparators (16, 17, 18) is three in each case.

4. Circuit arrangement according to Claim 3, **characterized in that** the number of optocouplers (28) is two and **in that** there is situated between the voltage comparators (16, 17, 18) and the optocouplers (28) a logic circuit (27) that converts the possible combinations of the comparison results of the voltage comparators (16, 17, 18) into two binary control signals for the optocouplers (28, 29).

## Revendications

1. Montage pour détecter de manière intrinsèquement sûre des signaux binaires d'un transmetteur (13) à résistance interne variable, comportant une source (2 à 9) de tension continue qui produit une tension d'alimentation constante et à la sortie (10) de tension de laquelle le transmetteur (13) est raccordé par l'intermédiaire d'une résistance (11) de mesure du courant, comportant un diviseur (14) de tension à plusieurs étages qui se trouve à la sortie (10) de tension et aux prises (15) de tension duquel des comparateurs (16, 17, 18) de tension sont raccordés par respectivement une borne (19, 20, 21) d'entrée, tandis que les autres bornes (22, 23, 24) d'entrée des comparateurs (16, 17, 18) de tension sont reliés à la borne (26) de la résistance (11) de mesure du courant se trouvant sur le transmetteur (13), et comportant des optocoupleurs (28, 29) montés en aval des comparateurs (16, 17, 18) de tension pour transmettre les résultats de comparaison des comparateurs (16, 17, 18) de tension à un dispositif (30) d'exploitation.

2. Montage suivant la revendication 1, **caractérisé en ce que** la source de tension continue est constituée d'une alimentation ayant un transformateur (6) pour la séparation de potentiel.

3. Montage suivant la revendication 1 ou 2, **caractérisé en ce que** le nombre des prises (15) de tension du diviseur (14) de tension et des comparateurs (16, 17, 18) de tension est respectivement de 3.

4. Montage suivant la revendication 3, **caractérisé en ce que** le nombre des optocoupleurs (28) est de deux et **en ce qu'**il se trouve entre les comparateurs (16, 17, 18) de tension et les optocoupleurs (28) un circuit (27) logique qui convertit les combinaisons possibles des résultats de comparaison des comparateurs (16, 17, 18) de tension en deux signaux de commande binaires pour les optocoupleurs (28, 29).
